# EUROPEAN PATENT SPECIFICATION

(11) **EP 4 664 036 B1**
(45) Date of publication and mention of the grant of the patent: **07.10.2026**
(21) Application number: 25182164.1
(22) Date of filing: 11.06.2025
(51) Int. Cl.: F25B 41/20, F16K 31/06, F16K 31/08, F25B 49/02

(54) **WATER CHILLING UNIT**
WASSERKÜHLEINHEIT
UNITÉ DE REFROIDISSEMENT D'EAU

(30) Priority: 13.06.2024 CN 202410763560
(43) Date of publication of application: 17.12.2025
(73) Proprietor: Carrier Corporation, Palm Beach Gardens, FL 33418 (US)
(72) Inventor: LI, Jiedong, Shanghai, 201206 (CN); CAO, Jun, Shanghai, 201206 (CN); ZHANG, Wei, Shanghai, 201206 (CN)
(74) Representative: Dehns

(56) References cited:
- KR-B1- 101 110 445
- US-A1- 2007 267 069
- US-A1- 2008 128 033
- US-A1- 2022 074 514

## Description

This invention relates to the technical field of air conditioners, in particular to a water chilling unit.

When a water chilling unit of an HVAC system operates normally, a refrigerant is compressed by a compressor and then discharged into a condenser from an outlet of the compressor through a discharge pipe. When the water chilling unit is shut down normally or unexpectedly, an uncondensed refrigerant may flow back into the compressor through the discharge pipe, resulting in reverse rotation of an impeller and a rotor and generation of certain noise and vibration, which may affect the subsequent normal operation of the water chilling unit over time.

At present, a common solution is to install a spring-loaded check valve in the discharge pipe. However, a maximum opening of the spring-loaded check valve is limited, which may hinder normal discharge of the compressor, causing a constant pressure drop on both sides of the spring-loaded check valve and affecting performance of the water chilling unit. In addition, when a discharge flow of the compressor is unstable, the check valve may also generate some noise, which causes trouble to the user.

KR 101 110 445 B1 discloses a refrigeration system comprising a check valve at the discharge side of the compressor with two different opening and closing mechanisms. The first check valve configuration has an opening and closing member which is located in the hollow of the housing and moves in the vertical direction by pressure and two flanges. The second check valve configuration has an opening and closing member which has four blades formed on a disk and disposed radially from the center of the disk.

This invention aims to provide a water chilling unit to at least solve or alleviate some of the problems existing in the related art.

The present invention provides a water chilling unit as defined in claim 1. It includes a compressor; a condenser; a compressor outlet pipeline configured to allow an outlet of the compressor to communicate with an inlet of the condenser; a check valve having a valve seat and a valve plate and disposed in the compressor outlet pipeline; and a valve chamber formed by enclosure of the valve seat and having a valve chamber inlet and a valve chamber outlet, in which the check valve further includes a valve plate disposed in the valve chamber, a swing arm with one end fixed to the valve plate and the other end connected to the valve seat via a rotating section, a valve chamber inlet-side magnet disposed on a side of the valve chamber inlet of the valve seat, a valve chamber outlet-side magnet disposed on a side of the valve chamber outlet of the valve seat, a valve plate-side magnet disposed at an edge of the valve plate while matching the valve chamber inlet-side magnet, and a swing arm-side magnet disposed on the swing arm while matching the valve chamber outlet-side magnet.

Optionally, polarity of the valve plate-side magnet is the same as polarity of the valve chamber inlet-side magnet, and polarity of the swing arm-side magnet is different from polarity of the valve chamber outlet-side magnet.

Optionally, the valve chamber inlet-side magnet and/or the valve chamber outlet-side magnet are electromagnets.

Optionally, the water chilling unit further includes: a compressor electronic control unit configured to control start-stop and an operating condition of the compressor; and a check valve electronic control unit electrically connected to the compressor electronic control unit and the valve chamber inlet-side magnet and/or the valve chamber outlet-side magnet, respectively.

Optionally, the rotating section is a torsion spring mechanism, one end of the torsion spring mechanism is fixed to the valve seat, and the other end of the torsion spring mechanism is connected to the swing arm.

Optionally, the water chilling unit further includes: a valve seat recess formed on a surface of the valve seat, in which the torsion spring mechanism is disposed in the valve seat recess.

Optionally, the water chilling unit further includes: a valve chamber inlet flange disposed protrudingly from a surface of the valve seat while surrounding the valve chamber inlet and matching the valve plate, in which the valve chamber inlet-side magnet is disposed on a side of the valve chamber inlet flange close to the valve chamber.

Optionally, the valve chamber inlet-side magnet is one or more magnetic blocks disposed at equal intervals along a circumference of the valve chamber inlet, and the valve plate-side magnet is one or more magnetic blocks disposed at equal intervals along a circumference of the edge of the valve plate and matching the valve chamber inlet-side magnet in number and position.

Optionally, the swing arm-side magnet is one or more magnetic blocks disposed at a position of the swing arm close to the rotating section, and the valve chamber outlet-side magnet is one or more magnetic blocks disposed on a side wall of the valve seat and matching the swing arm-side magnet in number and position.

Optionally, the valve plate is disposed at a predetermined angle relative to a side wall of the valve chamber when the valve chamber outlet-side magnet and the swing arm-side magnet are attracted.

Optionally, the compressor is disposed above the condenser, the compressor outlet pipeline has a main body section extending in a vertical direction and a bent section that is formed by bending the main body section laterally and communicates with the outlet of the compressor, and the check valve is disposed in the main body section.

Optionally, the compressor is a centrifugal compressor.
Certain exemplary embodiments will now be described in greater detail by way of example only and with reference to the accompanying drawings in which:
Fig. 1 is a schematic diagram of a water chilling unit.
Fig. 2 is a schematic diagram of an overall structure of a check valve in a first position (that is, a closed state of the check valve).
Fig. 3 is a schematic diagram of a partial structure of the check valve.
Fig. 4 is a schematic diagram of a partial structure of the check valve.
Fig. 5 is a schematic diagram of a partial structure of the check valve.
Fig. 6 is a schematic diagram of an overall structure of the check valve in a second position (that is, an open state of the check valve).
Fig. 7 is a schematic diagram of a water chilling unit.
Fig. 8 is a circuit diagram of a check valve electronic control unit.

List of Reference Numerals: Compressor 1, condenser 2, throttling device 3, evaporator 4, compressor outlet pipeline 5, check valve 6, valve seat 61, valve seat recess 611, valve plate 62, valve chamber 63, valve chamber inlet 631, valve chamber inlet flange 6311, valve chamber outlet 632, swing arm 64, rotating section 65, valve chamber inlet-side magnet 66, valve chamber outlet-side magnet 67, valve plate-side magnet 68, swing arm-side magnet 69, compressor electronic control unit 7, and check valve electronic control unit 8.

First, it should be noted that compositions, working principles, features, advantages and the like of a water chilling unit according to this invention will be described below by way of example. However, it should be understood that all descriptions are only given for exemplification and therefore should not be understood as forming any limitation on the scope of the present invention as set out in the appended claims.

In addition, for any single technical feature described or implicit in one or more embodiments mentioned herein, or any single technical feature illustrated or implicit in the drawings, this invention still allows any combination or deletion between these technical features (or equivalents thereof) without any technical obstacles, thereby obtaining more other embodiments of this invention that may not be directly mentioned herein.

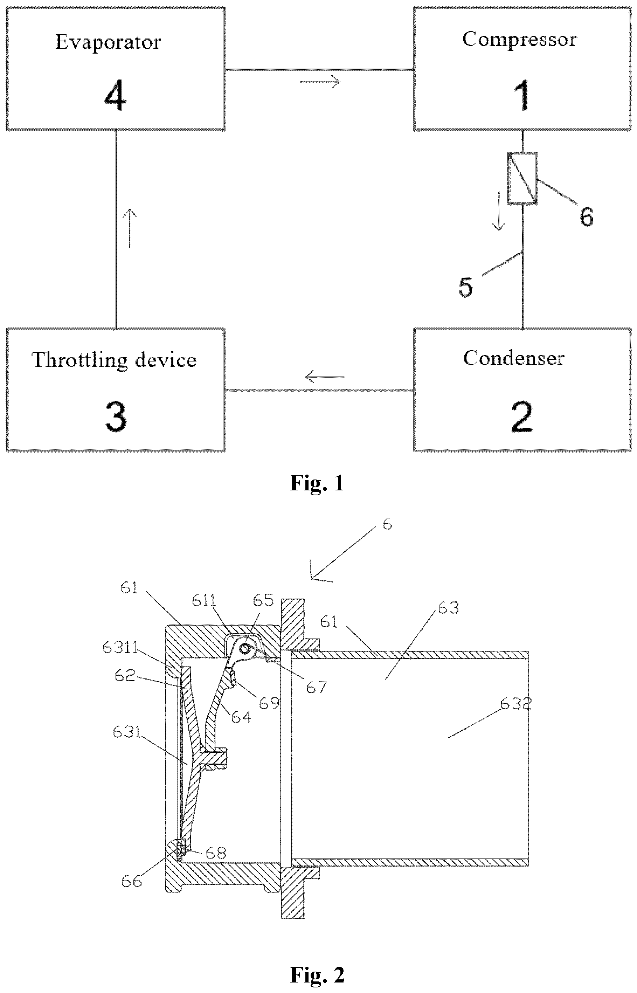

Fig. 1 is a schematic diagram of a water chilling unit according to one or more embodiments of this invention, in which a flow direction of a refrigerant is indicated by arrows. As illustrated in Fig. 1, the water chilling unit of one or more embodiments of this invention includes a compressor 1, a condenser 2, a throttling device 3, and an evaporator 4, which constitute a refrigerant loop, and further includes a compressor outlet pipeline 5 that allows an outlet of the compressor 1 to communicate with the condenser 2, and a check valve 6 disposed at the compressor outlet pipeline 5.

The specific type of the compressor 1 is not limited here. In some embodiments, the compressor 1 may be a screw compressor, a centrifugal compressor, a scroll compressor, or the like. Preferably, the compressor 1 according to one or more embodiments of this invention is a centrifugal compressor.

The specific type of the condenser 2 is not limited here. In some embodiments, the condenser may be a water-cooled condenser, an air-cooled condenser, or the like, and preferably, the condenser 2 in one or more embodiments of this invention is a water-cooled condenser.

Fig. 2 is a schematic diagram of an overall structure of the check valve 6 in a first position (that is, a closed state of the check valve) according to one or more embodiments of this invention. Referring to Fig. 2, the check valve 6 according to one or more embodiments of this invention further includes a valve seat 61, a valve plate 62, a valve chamber 63, a valve chamber inlet 631, a valve chamber outlet 632, a swing arm 64, a rotating section 65, a valve chamber inlet-side magnet 66, a valve chamber outlet-side magnet 67, a valve plate-side magnet 68, and a swing arm-side magnet 69.

Taking a centrifugal compressor as an example, the centrifugal compressor drives, by centrifugal force, a refrigerant to discharge from a low-pressure side to a high-pressure side of a system, and a high-pressure refrigerant is discharged to the condenser 2 through the compressor outlet pipeline 5. Preferably, in one or more embodiments of this invention, the compressor 1 is disposed above the condenser 2, the compressor outlet pipeline 5 has a main body section (not illustrated) extending in a vertical direction and a bent section (not illustrated) that is formed by bending the main body section laterally and communicates with a compressor outlet, and the check valve 6 is disposed in the main body section of the compressor outlet pipeline 5. The check valve 6 is composed of the valve seat 61 and the valve plate 62, the valve chamber 63 is formed by the enclosure of the valve seat 61, and high-pressure refrigerant gas enters the valve chamber 63 through the valve chamber inlet 631 and flows out of the valve chamber 63 through the valve chamber outlet 632.

The valve plate 62 is disposed in the valve chamber 63 and is connected to the valve seat 61 via the swing arm 64. One end of the swing arm 64 is fixed to the valve plate 62, and the other end of the swing arm 64 is connected to the valve seat 61 via the rotating section 65. Preferably, the rotating section 65 is a torsion spring mechanism, one end of the torsion spring mechanism is fixed to the valve seat 61, and the other end of the torsion spring mechanism is connected to the swing arm 64. Preferably, a valve seat recess 611 formed on a surface of the valve seat 61 may also be provided at a connection between the swing arm 64 and the valve seat 61, and the torsion spring mechanism, that is, the rotating section 65, is provided in the valve seat recess 611. The surface of the valve seat 61 is provided with a valve chamber inlet flange 6311 protruding around the valve chamber inlet 631, and the valve chamber inlet flange 6311 is matched with the valve plate 62, so that an outer peripheral edge of the valve plate 62 can abut against or partially overlap with the valve chamber inlet flange 6311 to form a closed state of the check valve.

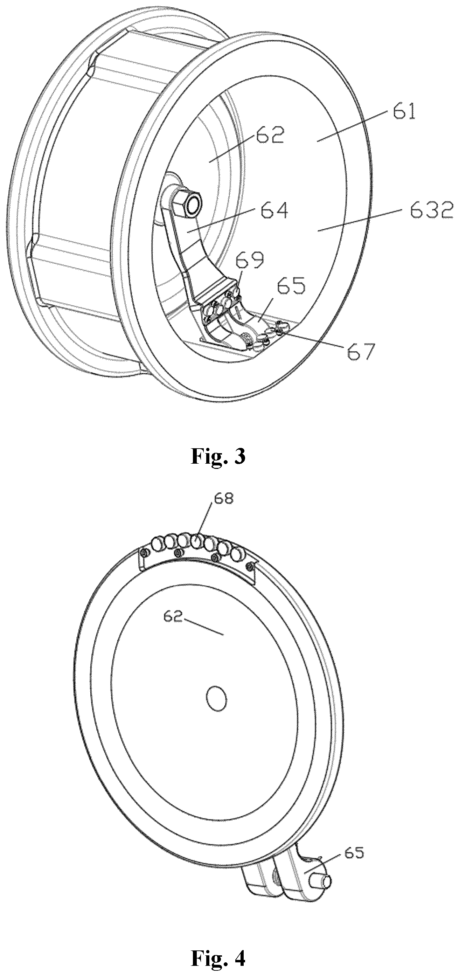

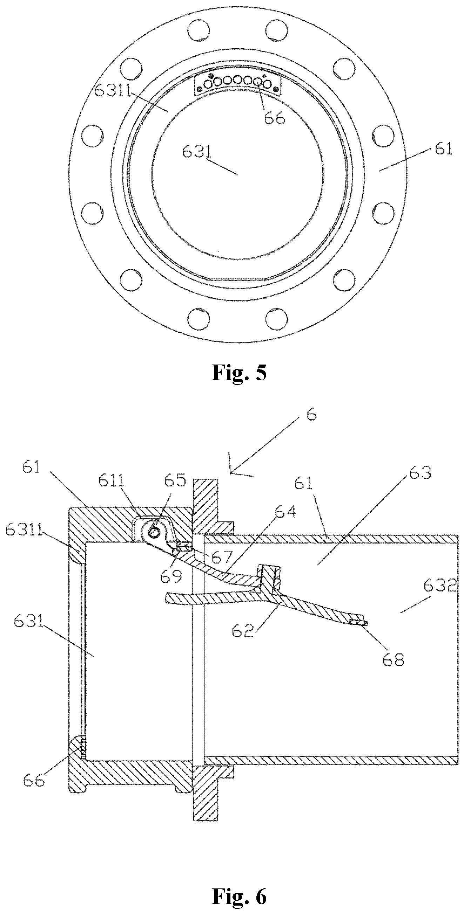

Fig. 3 is a schematic diagram of a partial structure of the check valve according to one or more embodiments of this invention and illustrates a three-dimensional structure in which the valve plate 62 is disposed inside the valve seat 61. Fig. 4 is a schematic diagram of a partial structure of the check valve according to one or more embodiments of this invention and illustrates a three-dimensional structure of the valve plate 62. Fig. 5 is a schematic diagram of a partial structure of the check valve according to one or more embodiments of this invention, and illustrates a structure inside the valve seat 61 viewed from the inside of the valve seat 61 toward the valve chamber inlet 631 when the valve plate 62 is not provided. Referring to Fig. 5, a valve chamber inlet-side magnet 66 is provided on a side facing the valve chamber outlet 632 of the valve chamber inlet flange 6311 disposed on the valve seat 61 and protruding from an inner surface of the valve seat 61. Referring to Fig. 3, a valve chamber outlet-side magnet 67 is disposed on an inner surface of the valve seat 61 close to the valve chamber outlet 632. As illustrated in Fig. 3, Fig. 4, and Fig. 5, the valve plate-side magnet 68 is disposed at an edge of the valve plate 62 while matching the valve chamber inlet-side magnet 66, and the swing arm-side magnet 69 is disposed on the swing arm 64 while matching the valve chamber outlet-side magnet 67. Polarity of the valve plate-side magnet 68 is the same as polarity of the valve chamber inlet-side magnet 66, and polarity of the swing arm-side magnet 69 is different from polarity of the valve chamber outlet-side magnet 67. Specifically, as an exemplary embodiment, the valve chamber inlet-side magnet 66 is one or more magnetic blocks disposed at equal intervals along a circumference of the valve chamber inlet flange 6311, and the valve plate-side magnet 68 is one or more magnetic blocks disposed at equal intervals along a circumference of the edge of the valve plate 62 and matching the valve chamber inlet-side magnet 66 in number and position.

The swing arm-side magnet 69 is one or more magnetic blocks disposed at a position of the swing arm 64 close to the rotating section 65, and the valve chamber outlet-side magnet 67 is one or more magnetic blocks disposed on a side wall of the valve seat 61 and matching the swing arm-side magnet 69 in number and position.

Fig. 6 is a schematic diagram of an overall structure of the check valve 6 in a second position (that is, an open state of the check valve) according to one or more embodiments of this invention. Referring to Fig. 2 and Fig. 6, in the water chilling unit according to one or more embodiments of this invention, when the water chilling unit operates normally, the compressor 1 continuously discharges the refrigerant into the compressor outlet pipeline 5, a high-temperature and high-pressure refrigerant continuously flows from an outlet end of the compressor 1 to an inlet end of the condenser 2. When the high-temperature and high-pressure refrigerant flows into the check valve 6 from the valve chamber inlet 631, a thrust is applied to the valve plate 62 to rotate toward the valve chamber outlet 632. After being subjected to the thrust towards the valve chamber outlet 632, the valve plate 62 drives the rotating section 65 to rotate towards the valve chamber outlet 632 through the swing arm 64. When the valve plate 62 rotates to a maximum opening (that is, the valve plate 62 rotates to the second position), the swing arm-side magnet 69 disposed on the swing arm 64 and the valve chamber outlet-side magnet 67 correspondingly disposed on the valve seat 61 attract each other due to unlike poles thereof, so that the valve plate 62 overcomes a rotational force of the torsion spring mechanism of the rotating section 65 under a combining action of the thrust of the refrigerant flowing through the check valve 6 and the magnetic attraction force, and thus the valve plate 62 remains in the second position and the check valve 6 maintains the maximum opening.

In this way, when the water chilling unit operates normally, through the combining action of the thrust of the refrigerant on the valve plate 62 and an attractive force between magnets, the valve plate 62 is always maintained at the second position, and the check valve 6 always maintains the maximum opening. This avoids the case where the check valve 6 only relies on the refrigerant to push a valve to open, or a valve opening is affected due to variations in the working condition, resulting in insufficient valve opening. Insufficient or unstable valve opening hinders the flow of the refrigerant in the compressor outlet pipeline 5, resulting in an excessive pressure drop at an outlet of the compressor 1 and loss of pressure head.

Preferably, an attractive force between the swing arm-side magnet 69 and the valve chamber outlet-side magnet 67 is less than a sum of gravity of the valve plate 62 itself and a force of the torsion spring mechanism. Alternatively, preferably, the attractive force between the swing arm-side magnet 69 and the valve chamber outlet-side magnet 67 is less than the force of the torsion spring mechanism. Specifically, the attractive force may be adjusted appropriately according to an arrangement direction of the valve plate 62 of the check valve 6.

When the water chilling unit is shut down normally or abnormally, the compressor 1 stops delivering the high-temperature and high-pressure refrigerant to the condenser 2, and the thrust from the refrigerant in the direction from the valve chamber inlet 631 to the valve chamber outlet 632 disappears. The attractive force between the swing arm-side magnet 69 and the valve chamber outlet-side magnet 67 is less than the sum of the gravity of the valve plate 62 itself and the force of the torsion spring mechanism, or is less than the force of the torsion spring mechanism, and therefore, under the combining action of the gravity of the valve plate 62 itself and the torsion spring mechanism of the rotating section 65, or under the force of the torsion spring mechanism, the valve plate 62 rotates toward the valve chamber inlet 631 with the rotating section 65 as an axis until the valve plate 62 rotates to the first position (the closed state of the check valve), and the valve plate 62 fits against the valve chamber inlet flange 6311 in the first position, that is, the check valve 6 is closed. Since the check valve 6 is closed, the refrigerant flowing in the compressor outlet pipeline 5 or the condenser 2 can be effectively prevented from flowing back to the outlet of the compressor 1 through the check valve 6 when the water chilling unit is shut down. Meanwhile, the valve chamber inlet-side magnet 66 disposed on the side of the valve chamber inlet flange 6311 close to the valve chamber inlet 631 and the valve plate-side magnet 68 correspondingly disposed at the edge of the valve plate 62 repel each other due to like poles thereof, and therefore, when the valve plate 62 rotates to a position close to the first position, a rotating speed of the rotating section 65 is slowed down by a repulsive force between the valve chamber inlet-side magnet 66 and the valve plate-side magnet 68. Under the combining action of the gravity of the valve plate 62 itself and the torsion spring mechanism, or under the action of the torsion spring mechanism, the valve plate 62 slowly overcomes the repulsive force between the valve chamber inlet-side magnet 66 and the valve plate-side magnet 68 until the valve plate 62 fits against the valve chamber inlet flange 6311, and thus the check valve 6 is closed. At this time, since the valve plate 62 does not directly hit the valve chamber inlet flange 6311, no noise or vibration is generated when the valve plate 62 of the check valve 6 is closed.

Preferably, the repulsive force between the valve chamber inlet-side magnet 66 and the valve plate-side magnet 68 is less than the sum of the gravity of the valve plate 62 itself and the force of the torsion spring mechanism, or less than the force of the torsion spring mechanism.

In this way, when the water chilling unit is shut down, the valve plate 62 rotates to the first position under the combining action of the gravity of the valve plate 62 itself and the torsion spring mechanism or under the force of the torsion spring mechanism, and fits against the valve chamber inlet flange 6311, and the check valve 6 is closed to prevent the refrigerant in the compressor outlet pipeline 5 or the condenser 2 from flowing back to the compressor 1. This avoids the case where when the water chilling unit is shut down, the high-temperature and high-pressure refrigerant flows back along the compressor outlet pipeline 3, which causes an impeller and a rotor of the compressor 1 to rotate reversely, generating significant noise and vibration, and affecting a subsequent normal operation of the water chilling unit.

Meanwhile, by the repulsive force between the valve chamber inlet-side magnet 66 and the valve plate-side magnet 68, the rotating speed of the valve plate 62 as the valve plate 62 approaches the first position is slowed down, thereby avoiding noise generated by the valve plate 62 directly colliding with the valve chamber inlet flange 6311 under the combining action of the gravity of the valve plate 62 itself and the torsion spring mechanism or under the force of the torsion spring mechanism, and also prolonging a service life of the check valve 6.

Of course, in a case where the repulsive force between the valve chamber inlet-side magnet 66 and the valve plate-side magnet 68 is controlled to be less than the sum of the gravity of the valve plate 62 itself and the force of the torsion spring mechanism, or less than the force of the torsion spring mechanism, even if the valve plate 62 is subjected to the repulsive force between the valve chamber inlet-side magnet 66 and the valve plate-side magnet 68 when the valve plate 62 approaches the valve chamber inlet flange 6311, the valve plate 62 can still fit tightly against the valve chamber inlet flange 6311 under the combining action of the gravity of the valve plate 62 itself and the torsion spring mechanism or under the force of the torsion spring mechanism to complete the closure of the check valve 6 and prevent the backflow of the refrigerant.

In the above description, regarding the repulsive force between the valve chamber inlet-side magnet 66 and the valve plate-side magnet 68, the gravity of the valve plate 62 itself and the force of the torsion spring mechanism are considered, and in addition, a pressure difference from the valve chamber outlet 632 toward the valve chamber inlet 631 formed when the compressor 1 is shut down also contributes to pushing the valve plate 62 back to the first position. Therefore, in addition to the gravity of the valve plate 62 itself and the force of the torsion spring mechanism, the repulsive force between the valve chamber inlet-side magnet 66 and the valve plate-side magnet 68 can also be appropriately designed in combination with the pressure difference from the valve chamber outlet 632 toward the valve chamber inlet 631 formed when the compressor 1 is shut down, which all fall within the protection scope of this invention as set out in the appended claims.

Further preferably, as illustrated in Fig. 6, when the valve chamber outlet-side magnet 67 and the swing arm-side magnet 69 are attracted, the valve plate 62 may be disposed at a predetermined angle relative to a side wall of the valve chamber 63. Preferably, the predetermined angle is greater than 10 degrees and less than 30 degrees, and further preferably 15 degrees.

When the water chilling unit starts to operate, the high-temperature and high-pressure refrigerant from the compressor 1 applies the thrust towards the valve chamber outlet 632 to the valve plate 62, and the thrust overcomes the sum of the gravity of the valve plate 62 itself and the force of the torsion spring mechanism or overcomes the force of the torsion spring mechanism until the valve chamber outlet-side magnet 67 and the swing arm-side magnet 69 are attracted to each other.

During normal operation, the valve chamber outlet-side magnet 67 and the swing arm-side magnet 69 remain in an attracted state, and the valve plate 62 is maintained at the maximum opening at an angle greater than 10 degrees and less than 30 degrees relative to the side wall of the valve chamber 63. The valve plate 62 still maintains a certain angle relative to the refrigerant flowing through the check valve 6, and the attractive force between the swing arm-side magnet 69 and the valve chamber outlet-side magnet 67 and the thrust toward the valve chamber outlet 632 applied by the refrigerant to the valve plate 62 overcome the sum of the gravity of the valve plate 62 itself and the force of the torsion spring mechanism or overcome the force of the torsion spring mechanism, thereby controlling the valve plate 62 to maintain at the maximum opening and reducing a pressure drop at the outlet of the compressor 1 caused by the check valve 6 hindering the flow of the refrigerant in the compressor outlet pipeline 5.

When the water chilling unit stops operating, the refrigerant no longer flows from the compressor 1 to the condenser 2, and the thrust toward the valve chamber outlet 632 applied by the refrigerant to the valve plate 62 disappears. At the same time, when the water chilling unit stops operating, a part of the refrigerant flows back, and the reflux refrigerant applies a thrust toward the valve chamber inlet 631 to the valve plate 62, which is still maintained in the second position by the attractive force between the swing arm-side magnet 69 and the valve chamber outlet-side magnet 67. The valve plate 62 overcomes the attractive force between the swing arm-side magnet 69 and the valve chamber outlet-side magnet 67 under the combining action of the thrust applied by the reflux refrigerant, the gravity of the valve plate 62 itself and the torsion spring mechanism, rotates to the first position, and fits against the valve chamber inlet flange 6311, and thus the check valve 6 is closed.

By arranging the valve plate 62 at a predetermined angle relative to the side wall of the valve chamber 63, the pressure drop caused by the opening of the valve plate 62 during normal operation of the compressor 1 can be reduced. On the other hand, when the compressor 1 is shut down, a certain thrust towards the valve chamber inlet 631 can be applied to the valve plate 62 by the reflux refrigerant, which helps to rapidly disengage the magnetic attraction between the swing arm-side magnet 69 and the valve chamber outlet-side magnet 67, thereby enabling the valve plate 62 to swiftly rotate to the first position, accelerating the closure of the check valve 6, and reducing the backflow of the refrigerant.

**In** some embodiments, a positional relationship between the compressor 1 and the condenser 2 is not particularly limited, and the compressor 1 may be disposed above the condenser 2. When the compressor 1 is disposed above the condenser 2, the refrigerant at the outlet of the compressor 1 flows from top to bottom, and therefore, unlike the above description, when the compressor 1 starts to operate, the high-temperature and high-pressure refrigerant from the compressor 1 applies a thrust towards the valve chamber outlet 632 to the valve plate 62, and the thrust and the gravity of the valve plate 62 itself overcome the force of the torsion spring mechanism until the valve chamber outlet-side magnet 67 and the swing arm-side magnet 69 are attracted to each other. When the compressor 1 stops operating, the reflux refrigerant applies the thrust toward the valve chamber inlet 631 to the valve plate 62, which is still maintained in the second position by the attractive force between the swing arm-side magnet 69 and the valve chamber outlet-side magnet 67, and the valve plate 62 overcomes the attractive force between the swing arm-side magnet 69 and the valve chamber outlet-side magnet 67 and the gravity of the valve plate 62 itself under the combining action of the thrust applied by the reflux refrigerant and the torsion spring mechanism, and rotates to the first position to complete the closing of the check valve 6.

Of course, this invention is not limited thereto, and the compressor 1 and the condenser 2 may be disposed according to the actual use environment. Any configuration that restricts refrigerant backflow using the check valve of this invention shall fall within the protection scope of this invention as set out in the appended claims.

In some embodiments, the valve chamber inlet-side magnet 66 is provided on the side of the valve chamber inlet flange 6311 on the valve seat 61 facing the valve chamber outlet 632, the valve chamber outlet-side magnet 67 is provided on the side of the valve seat 61 close to the valve chamber outlet 632, the valve plate-side magnet 68 is provided at the edge of the valve plate 62 while matching the valve chamber inlet-side magnet 66, and the swing arm-side magnet 69 is provided on the swing arm 64 while matching the valve chamber outlet-side magnet 67, but this invention is not limited thereto. The magnets may be provided at other positions according to different shapes of check valves, and any configuration that utilizes magnets to maintain the check valve 6 at the maximum opening during normal operation of the water chilling unit and provides cushioning for the valve plate 62 upon shutdown of the water chilling unit shall be included within the protection scope of this invention as set out in the appended claims.

In the second embodiment of this invention, elements denoted by the same names and symbols as those in the first embodiment represent identical components, and descriptions thereof are omitted here.

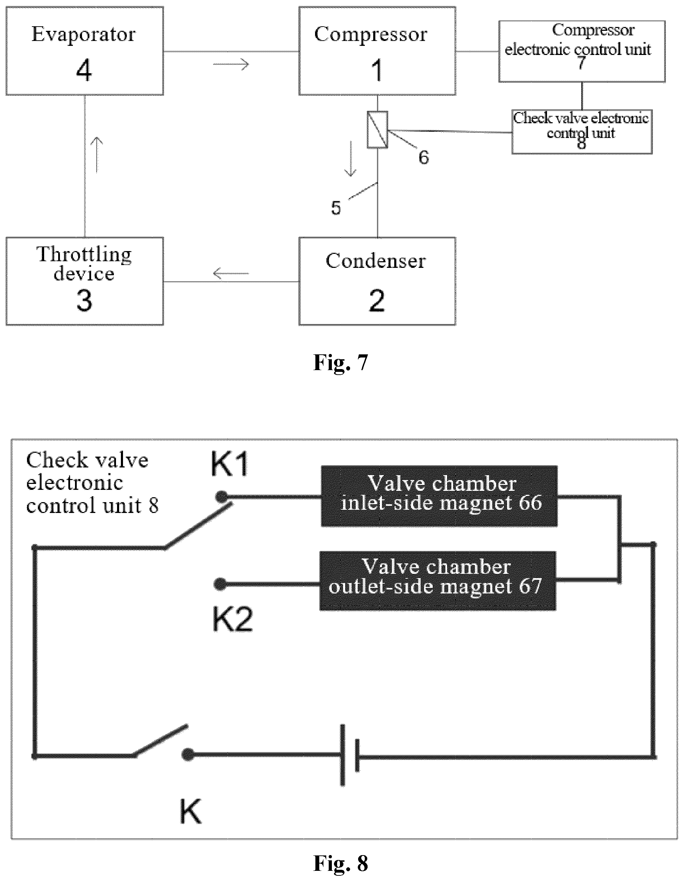

Fig. 7 is a schematic diagram of a water chilling unit according to a second embodiment of this invention, in which a flow direction of a refrigerant is indicated by arrows. As illustrated in Fig. 7, unlike the first embodiment, the water chilling unit according to one or more embodiments of this invention further includes a compressor electronic control unit 7 and a check valve electronic control unit 8, and the valve chamber inlet-side magnet 66 and the valve chamber outlet-side magnet 67 in one or more embodiments of this invention are electromagnets.

The compressor electronic control unit 7 is connected to the compressor 1 to control start-stop and an operating condition of the compressor 1. The check valve electronic control unit 8 is connected to the compressor electronic control unit 7, the valve chamber inlet-side magnet 66 and the valve chamber outlet-side magnet 67, and controls on-off of a current at each of the valve chamber inlet-side magnet 66 and the valve chamber outlet-side magnet 67 in response to a command of the compressor electronic control unit 7.

Fig. 8 is a circuit diagram of the check valve electronic control unit according to the second embodiment of this invention. Referring to Fig. 8, the check valve electronic control unit 8 includes parallel circuits that respectively connect the valve chamber inlet-side magnet 66 and the valve chamber outlet-side magnet 67, switches k1 and k2 that switch connections of the valve chamber inlet-side magnet 66 and the valve chamber outlet-side magnet 67, a main circuit connected in series with the parallel circuits, and a switch k linked to the command of the compressor electronic control unit 7. The valve chamber inlet-side magnet 66 is connected to the switch k1, and the valve chamber outlet-side magnet 67 is connected to the switch k2.

**In** the check valve 6 in some embodiments, when the water chilling unit operates normally, the compressor electronic control unit 7 controls the compressor 1 to start, the switches k and k2 are then turned on, and the valve chamber outlet-side magnet 67 is energized and generates a magnetic force. Therefore, when the high-temperature and high-pressure refrigerant flows through the check valve 6, a thrust toward the valve chamber outlet 632 is applied to the valve plate 62. After being subjected to the thrust towards the valve chamber outlet 632, the valve plate 62 drives the rotating section 65 to rotate towards the valve chamber outlet 632 through the swing arm 64. When the valve plate 62 rotates to a maximum opening (that is, the valve plate 62 rotates to the second position), the swing arm-side magnet 69 disposed on the swing arm 64 and the valve chamber outlet-side magnet 67 correspondingly disposed on the valve seat 61 attract each other due to unlike poles thereof, so that the valve plate 62 overcomes a force of the torsion spring mechanism of the rotating section 65 under a combining action of the thrust of the refrigerant flowing through the check valve 6 and the magnetic attraction force, and thus the valve plate 62 remains in the second position and the check valve 6 maintains the maximum opening.

Preferably, the second embodiment of this invention differs from the first embodiment in that the attractive force between the swing arm-side magnet 69 and the valve chamber outlet-side magnet 67 can be controlled to be greater than the sum of the gravity of the valve plate 62 itself and the force of the torsion spring mechanism, and the valve plate 62 can be controlled to remain consistently in the second position when the water chilling unit is started, thereby ensuring that the check valve maintains the maximum opening. This avoids the case where the valve plate 62 rotates due to the unstable discharge flow and the attractive force between the swing arm-side magnet 69 and the valve chamber outlet-side magnet 67 being less than the sum of the gravity of the valve plate 62 itself and the force of the torsion spring mechanism, thereby hindering the flow of the refrigerant.

After the water chilling unit stops operating, the compressor electronic control unit 7 controls the compressor to stop operating. At this time, the switch k remains on, but the switch k2 is turned off, and the switch k1 is turned on. The valve chamber outlet-side magnet 67 is de-energized and loses the magnetic force, while the valve chamber inlet-side magnet 66 is energized and generates a magnetic force. At this time, the valve plate 62 rotates to the first position under the combining action of the gravity of the valve plate 62 itself and the torsion spring mechanism or under the force of the torsion spring mechanism, and fits against the valve chamber inlet flange 6311, and the check valve 6 is closed to prevent the backflow of the refrigerant in the compressor outlet pipeline 5. This avoids the case where when the water chilling unit is shut down, the high-temperature and high-pressure refrigerant flows back along the compressor outlet pipeline 3, which causes an impeller and a rotor to rotate reversely, generates significant noise and vibration, and affects a subsequent normal operation of the water chilling unit. In this case, since the valve chamber outlet-side magnet 67 is de-energized and loses the magnetic force, the valve plate 62 can rotate to the first position without overcoming the attractive force between the valve chamber outlet-side magnet 67 and the swing arm-side magnet 69, which further ensures that when the compressor 1 is shut down, the valve plate 62 can respond to the shutdown more quickly and rotate to the first position, thereby completing the closure of the check valve 6 as soon as possible.

Meanwhile, since the valve chamber inlet-side magnet 66 is energized and generates the magnetic force, by the repulsive force between the valve chamber inlet-side magnet 66 and the valve plate-side magnet 68, a speed at which the valve plate 62 rotates to the first position is slowed down, thereby avoiding noise generated by the valve plate 62 colliding with the valve chamber inlet flange 6311 under the gravity of the valve plate 62 itself and the force of the torsion spring mechanism, and also prolonging a service life of the valve.

When the water chilling unit stops operating for a period of time, the switch k and the switch k1 are turned off, and the valve chamber inlet-side magnet 66 is de-energized and loses the magnetic force. At this time, the repulsive force between the valve chamber inlet-side magnet 66 and the valve plate-side magnet 68 disappears, and the valve plate 62 fits tightly against the valve chamber inlet flange 6311 under the gravity of the valve plate 62 itself and the force of the torsion spring mechanism, thereby preventing the backflow of the refrigerant in the compressor outlet pipeline 5.

In some embodiments, when the water chilling unit stops operating, the valve plate 62 can rotate to the first position under combining forces of the torsion spring mechanism and the refrigerant backflow, but this invention is not limited thereto. In other embodiments, the valve plate 62 may also rotate to the first position under the combining action of the gravity of the valve plate 62 itself and the refrigerant backflow or only under the action of the refrigerant backflow, to complete the closure of the check valve 6. For example, when the water chilling unit stops operating, the switch k2 is turned off, and at this time, the valve chamber outlet-side magnet 67 is de-energized and loses the magnetic force. In a case where the valve chamber inlet 631 is disposed below the valve chamber outlet, even if the torsion spring mechanism is not disposed at the rotating section 65, the valve plate 62 can rotate to the first position by its own gravity and fit against the valve chamber inlet flange 6311 since there is no magnetic attractive force between the valve chamber outlet-side magnet 67 and the swing arm-side magnet 69.

Therefore, configurations that determine whether a torsion spring mechanism needs to be installed at the rotating section 65 based on varying magnetic forces of the valve chamber inlet-side magnet 66, the valve chamber outlet-side magnet 67, the valve plate-side magnet 68, and the swing arm-side magnet 69 shall also fall within the protection scope of this invention as set out in the appended claims.

The above embodiments are merely exemplary embodiments of this invention and are not intended to limit this invention. Any modifications, equivalent substitutions, and improvements made within the principles of this invention shall be included in the protection scope of this invention as set out in the appended claims.

## Claims

1. A water chilling unit comprising:
a compressor (1);
a condenser (2);
a compressor outlet pipeline (5) configured to allow an outlet of the compressor to communicate with an inlet of the condenser;
a check valve (6) having a valve seat (61) and disposed in the compressor outlet pipeline; and
a valve chamber (63) formed by enclosure of the valve seat and having a valve chamber inlet (631) and a valve chamber outlet (632), wherein
the check valve further includes
a valve plate (62) disposed in the valve chamber,
a swing arm (64) with one end fixed to the valve plate and the other end connected to the valve seat via a rotating section (65),
a valve chamber inlet-side magnet (66) disposed on a side of the valve chamber inlet of the valve seat,
a valve chamber outlet-side magnet (67) disposed on a side of the valve chamber outlet of the valve seat,
a valve plate-side magnet (68) disposed at an edge of the valve plate while matching the valve chamber inlet-side magnet, and
a swing arm-side magnet (69) disposed on the swing arm while matching the valve chamber outlet-side magnet.

2. The water chilling unit according to claim 1, wherein
polarity of the valve plate-side magnet (68) is the same as polarity of the valve chamber inlet-side magnet (66), and
polarity of the swing arm-side magnet (69) is different from polarity of the valve chamber outlet-side magnet (67).

3. The water chilling unit according to any of claims 1 or 2, wherein the valve chamber inlet-side magnet (66) and/or the valve chamber outlet-side magnet (67) are electromagnets.

4. The water chilling unit according to claim 3, further comprising:
a compressor electronic control unit (7) configured to control start-stop and an operating condition of the compressor (1); and
a check valve electronic control unit (8) electrically connected to the compressor electronic control unit and the valve chamber inlet-side magnet (66) and/or the valve chamber outlet-side magnet (67), respectively.

5. The water chilling unit according to any preceding claim, wherein
the rotating section (65) is a torsion spring mechanism, one end of the torsion spring mechanism is fixed to the valve seat (61), and the other end of the torsion spring mechanism is connected to the swing arm (64).

6. The water chilling unit according to claim 5, further comprising:
a valve seat recess (611) formed on a surface of the valve seat (61), wherein the torsion spring mechanism is disposed in the valve seat recess.

7. The water chilling unit according to any preceding claim, further comprising:
a valve chamber inlet flange (6311) disposed protrudingly from a surface of the valve seat (61) while surrounding the valve chamber inlet (631) and matching the valve plate (62), wherein
the valve chamber inlet-side magnet (66) is disposed on a side of the valve chamber inlet flange close to the valve chamber (63).

8. The water chilling unit according to and preceding claim, wherein
the valve chamber inlet-side magnet (66) is one or more magnetic blocks disposed at equal intervals along a circumference of the valve chamber inlet (631), and
the valve plate-side magnet (68) is magnetic blocks disposed at equal intervals along a circumference of the edge of the valve plate (62) and matching the valve chamber inlet-side magnet in number and position.

9. The water chilling unit according to any preceding claim, wherein the swing arm-side magnet (69) is one or more magnetic blocks disposed at a position of the swing arm (64) close to the rotating section (65), and
the valve chamber outlet-side magnet (67) is one or more magnetic blocks disposed on a side wall of the valve seat (61) and matching the swing arm-side magnet in number and position.

10. The water chilling unit according to any preceding claim, wherein the valve plate (62) is disposed at a predetermined angle relative to a side wall of the valve chamber (63) when the valve chamber outlet-side magnet (67) and the swing arm-side magnet (69) are attracted.

11. The water chilling unit according to claim 10, wherein the predetermined angle is greater than 10 degrees and less than 30 degrees.

12. The water chilling unit according to any preceding claim, wherein the compressor (1) is disposed above the condenser (2), the compressor outlet pipeline (5) has a main body section extending in a vertical direction and a bent section that is formed by bending the main body section laterally and communicates with the outlet of the compressor, and the check valve (6) is disposed in the main body section.

13. The water chilling unit according to any preceding claim, wherein the compressor (1) is a centrifugal compressor.

## Patentansprüche

1. Wasserkühleinheit, umfassend:
einen Verdichter (1);
einen Kondensator (2);
eine Verdichterauslassleitung (5), die konfiguriert ist, einem Auslass des Verdichters zu ermöglichen, mit einem Einlass des Kondensators in Verbindung zu stehen;
ein Rückschlagventil (6), das einen Ventilsitz (61) aufweist und in der Verdichterauslassleitung angeordnet ist; und
eine Ventilkammer (63), die durch Umschließung des Ventilsitzes ausgebildet ist und einen Ventilkammereinlass (631) und einen Ventilkammerauslass (632) aufweist, wobei
das Rückschlagventil ferner beinhaltet
eine Ventilplatte (62), die in der Ventilkammer angeordnet ist, einen Schwenkarm (64) mit einem Ende, das an der Ventilplatte befestigt ist, und dem anderen Ende, das über einen Drehabschnitt (65) mit dem Ventilsitz verbunden ist,
einen ventilkammereinlassseitigen Magneten (66), der auf einer Seite des Ventilkammereinlasses des Ventilsitzes angeordnet ist, einen ventilkammerauslassseitigen Magneten (67), der auf einer Seite des Ventilkammerauslasses des Ventilsitzes angeordnet ist, einen ventilplattenseitigen Magneten (68), der an einem Rand der Ventilplatte angeordnet ist und dabei zum ventilkammereinlassseitigen Magneten passend ist, und
einen schwenkarmseitigen Magneten (69), der auf dem Schwenkarm angeordnet ist und dabei zum ventilkammerauslassseitigen Magneten passend ist.

2. Wasserkühleinheit nach Anspruch 1, wobei
die Polarität des ventilplattenseitigen Magneten (68) dieselbe ist wie die Polarität des ventilkammereinlassseitigen Magneten (66), und
die Polarität des schwenkarmseitigen Magneten (69) verschieden von der Polarität des ventilkammerauslassseitigen Magneten (67) ist.

3. Wasserkühleinheit nach einem der Ansprüche 1 oder 2, wobei der ventilkammereinlassseitige Magnet (66) und/oder der ventilkammerauslassseitige Magnet (67) Elektromagnete sind.

4. Wasserkühleinheit nach Anspruch 3, ferner umfassend:
eine elektronische Verdichtersteuereinheit (7), die konfiguriert ist, Start-Stopp und einen Betriebszustand des Verdichters (1) zu steuern; und
eine elektronische Rückschlagventilsteuereinheit (8), die jeweils mit der elektronischen Verdichtersteuereinheit und dem ventilkammereinlassseitigen Magneten (66) und/oder dem ventilkammerauslassseitigen Magneten (67) elektrisch verbunden ist.

5. Wasserkühleinheit nach einem der vorhergehenden Ansprüche, wobei
der Drehabschnitt (65) ein Torsionsfedermechanismus ist, ein Ende des Torsionsfedermechanismus an dem Ventilsitz (61) befestigt ist und das andere Ende des Torsionsfedermechanismus mit dem Schwenkarm (64) verbunden ist.

6. Wasserkühleinheit nach Anspruch 5, ferner umfassend:
eine Ventilsitzaussparung (611), die auf einer Oberfläche des Ventilsitzes (61) ausgebildet ist, wobei der Torsionsfedermechanismus in der Ventilsitzaussparung angeordnet ist.

7. Wasserkühleinheit nach einem der vorhergehenden Ansprüche, ferner umfassend:
einen Ventilkammereinlassflansch (6311), der vorstehend von einer Oberfläche des Ventilsitzes (61) angeordnet ist und dabei den Ventilkammereinlass (631) umgibt und zur Ventilplatte (62) passend ist, wobei
der ventilkammereinlassseitige Magnet (66) auf einer Seite des Ventilkammereinlassflansches nahe der Ventilkammer (63) angeordnet ist.

8. Wasserkühleinheit nach einem vorhergehenden Anspruch, wobei der ventilkammereinlassseitige Magnet (66) ein oder mehrere Magnetblöcke ist, die in gleichen Abständen entlang eines Umfangs des Ventilkammereinlasses (631) angeordnet sind, und der ventilplattenseitige Magnet (68) Magnetblöcke ist, die in gleichen Abständen entlang eines Umfangs des Randes der Ventilplatte (62) angeordnet sind und in Anzahl und Position zum ventilkammereinlassseitigen Magneten passend sind.

9. Wasserkühleinheit nach einem der vorhergehenden Ansprüche, wobei der schwenkarmseitige Magnet (69) ein oder mehrere Magnetblöcke ist, die an einer Position des Schwenkarms (64) nahe dem Drehabschnitt (65) angeordnet sind, und
der ventilkammerauslassseitige Magnet (67) ein oder mehrere Magnetblöcke ist, die auf einer Seitenwand des Ventilsitzes (61) angeordnet sind und in Anzahl und Position zum schwenkarmseitigen Magneten passend sind.

10. Wasserkühleinheit nach einem der vorhergehenden Ansprüche, wobei die Ventilplatte (62) in einem vorbestimmten Winkel relativ zu einer Seitenwand der Ventilkammer (63) angeordnet ist, wenn der ventilkammerauslassseitige Magnet (67) und der schwenkarmseitige Magnet (69) angezogen sind.

11. Wasserkühleinheit nach Anspruch 10, wobei der vorbestimmte Winkel größer als 10 Grad und kleiner als 30 Grad ist.

12. Wasserkühleinheit nach einem der vorhergehenden Ansprüche, wobei der Verdichter (1) oberhalb des Kondensators (2) angeordnet ist, die Verdichterauslassleitung (5) einen sich in einer vertikalen Richtung erstreckenden Hauptkörperabschnitt und einen gebogenen Abschnitt aufweist, der durch Biegen des Hauptkörperabschnitts seitlich ausgebildet ist und mit dem Auslass des Verdichters in Verbindung steht, und das Rückschlagventil (6) in dem Hauptkörperabschnitt angeordnet ist.

13. Wasserkühleinheit nach einem der vorhergehenden Ansprüche, wobei der Verdichter (1) ein Kreiselverdichter ist.

## Revendications

1. Unité de refroidissement d'eau comprenant :
un compresseur (1) ;
un condenseur (2) ;
une conduite de sortie de compresseur (5) configurée pour permettre à une sortie du compresseur de communiquer avec une entrée du condenseur ;
une soupape de retenue (6) muni d'un siège de soupape (61) et disposé dans la conduite de sortie du compresseur ; et
une chambre de soupape (63) formée par l'enveloppe du siège de soupape et comportant une entrée de chambre de soupape (631) et une sortie de chambre de soupape (632), dans laquelle la soupape de retenue inclut en outre
une plaque de soupape (62) disposée dans la chambre de soupape, un bras oscillant (64) dont une extrémité est fixée à la plaque de soupape et l'autre extrémité est reliée au siège de soupape par une section rotative (65),
un aimant côté entrée de chambre de soupape (66) disposé sur un côté de l'entrée de la chambre de soupape du siège de soupape, un aimant côté sortie de chambre de soupape (67) disposé sur un côté de sortie de la chambre de soupape du siège de soupape, un aimant côté plaque de soupape (68) disposé sur un bord de la plaque de soupape tout en correspondant à l'aimant côté entrée de la chambre de soupape, et
un aimant côté bras oscillant (69) disposé sur le bras oscillant tout en correspondant à l'aimant côté sortie de chambre de soupape.

2. Unité de refroidissement d'eau selon la revendication 1, dans laquelle
la polarité de l'aimant côté plaque de soupape (68) est la même que la polarité de l'aimant côté entrée de chambre de soupape (66), et
la polarité de l'aimant côté bras oscillant (69) est différente de la polarité de l'aimant côté sortie de chambre de soupape (67).

3. Unité de refroidissement d'eau selon l'une quelconque des revendications 1 ou 2, dans laquelle l'aimant côté entrée de chambre de soupape (66) et/ou l'aimant côté sortie de chambre de soupape (67) sont des électroaimants.

4. Unité de refroidissement d'eau selon la revendication 3, comprenant en outre :
une unité de commande électronique de compresseur (7) configurée pour contrôler le démarrage-arrêt et une condition de fonctionnement du compresseur (1) ; et
une unité de commande électronique de soupape de retenue (8) connectée électriquement à l'unité de commande électronique de compresseur et à l'aimant côté entrée de chambre de soupape (66) et/ou à l'aimant côté sortie de chambre de soupape (67), respectivement.

5. Unité de refroidissement d'eau selon l'une quelconque des revendications précédentes, dans laquelle :
la section rotative (65) est un mécanisme à ressort de torsion, une extrémité du mécanisme à ressort de torsion est fixée au siège de soupape (61), et l'autre extrémité du mécanisme à ressort de torsion est reliée au bras oscillant (64).

6. Unité de refroidissement d'eau selon la revendication 5, comprenant en outre :
un logement de siège de soupape (611) formé sur une surface du siège de soupape (61), dans lequel le mécanisme de ressort de torsion est disposé dans le logement de siège de soupape.

7. Unité de refroidissement d'eau selon l'une quelconque des revendications précédentes, comprenant en outre :
une bride d'entrée de chambre de soupape (6311) disposée en saillie à partir d'une surface du siège de soupape (61) tout en entourant l'entrée de chambre de soupape (631) et en correspondant à la plaque de soupape (62), dans laquelle
l'aimant côté entrée de chambre de soupape (66) est disposé sur un côté de la bride d'entrée de chambre de soupape près de la chambre de soupape (63).

8. Unité de refroidissement d'eau selon l'une quelconque des revendications précédentes, dans laquelle
l'aimant côté entrée de chambre de soupape (66) est constitué d'un ou plusieurs blocs magnétiques disposés à intervalles égaux le long d'une circonférence de l'entrée de chambre de soupape (631), et
l'aimant côté plaque de soupape (68) est constitué de blocs magnétiques disposés à intervalles égaux le long d'une circonférence du bord de la plaque de soupape (62) et correspondant en nombre et en position à l'aimant côté entrée de chambre de soupape.

9. Unité de refroidissement d'eau selon l'une quelconque des revendications précédentes, dans laquelle l'aimant côté du bras oscillant (69) est constitué d'un ou plusieurs blocs magnétiques disposés à une position du bras oscillant (64) proche de la section rotative (65), et
l'aimant côté sortie de chambre de soupape (67) est constitué d'un ou plusieurs blocs magnétiques disposés sur une paroi latérale du siège de soupape (61) et correspondant en nombre et en position à l'aimant côté bras oscillant.

10. Unité de refroidissement d'eau selon l'une quelconque des revendications précédentes, dans laquelle la plaque de soupape (62) est disposée à un angle prédéterminé par rapport à une paroi latérale de la chambre de soupape (63) lorsque l'aimant côté sortie de chambre de soupape (67) et l'aimant côté bras oscillant (69) sont attirés.

11. Unité de refroidissement d'eau selon la revendication 10, dans laquelle l'angle prédéterminé est supérieur à 10 degrés et inférieur à 30 degrés.

12. Unité de refroidissement d'eau selon l'une quelconque des revendications précédentes, dans laquelle le compresseur (1) est disposé au-dessus du condenseur (2), la conduite de sortie de compresseur (5) comporte une section de corps principal s'étendant dans une direction verticale et une section coudée formée en pliant latéralement la section de corps principal et communiquant avec la sortie du compresseur, et la soupape de retenue (6) est disposé dans la section de corps principal.

13. Unité de refroidissement d'eau selon l'une quelconque des revendications précédentes, dans laquelle le compresseur (1) est un compresseur centrifuge.
